# EUROPEAN PATENT APPLICATION

(11) **EP 4 844 853 A1**
(43) Date of publication of application: **25.11.2026**
(21) Application number: 25741831.9
(22) Date of filing: 08.01.2025
(51) Int. Cl.: H01M 10/052, H01M 4/133, H01M 4/587, H01M 4/62, H01M 10/0567, H01M 10/0568, H01M 10/058

(54) **POWER STORAGE DEVICE AND METHOD FOR MANUFACTURING POWER STORAGE DEVICE**

(30) Priority: 15.01.2024 JP 2024003978
(71) Applicant: KABUSHIKI KAISHA TOYOTA JIDOSHOKKI, Kariya-shi, Aichi 448-8671 (JP)
(72) Inventor: IWATA, Hiroshi, Kariya-shi, Aichi 448-8671 (JP); ICHIKAWA, Yuki, Kariya-shi, Aichi 448-8671 (JP); SUGIMOTO, Yuki, Kariya-shi, Aichi 448-8671 (JP); ISHINO, Yuki, Kariya-shi, Aichi 448-8671 (JP); BABA, Hiromasa, Kariya-shi, Aichi 448-8671 (JP)
(74) Representative: TBK
(86) International application number: PCT/JP2025/000247
(87) International publication number: WO 2025/154586

(57) **Abstract**

A power storage device (10) is provided with: a positive electrode (21) that has a positive electrode active material layer (21b); a negative electrode (22) that has a negative electrode active material layer (22b); a separator (23) that is disposed between the positive electrode (21) and the negative electrode (22); and a liquid electrolyte that is disposed between the positive electrode (21) and the negative electrode (22). The basis weight of the negative electrode active material layer (22b) is 200 g/m² or more. The negative electrode active material layer (22b) contains graphite particles, carbon fibers, and a negative electrode binder. The liquid electrolyte contains lithium difluorophosphate and vinylene carbonate.

## Description

### TECHNICAL FIELD

The present disclosure relates to a power storage device and a method for manufacturing the power storage device.

### BACKGROUND ART

Patent Literature 1 discloses a flat power storage device formed by stacking separately produced power storage cells in series. Each power storage cell includes a positive electrode, a negative electrode, and a separator. The positive electrode includes a positive electrode active material layer applied to a central portion of one surface of a positive electrode current collector, which has the form of a foil. The negative electrode includes a negative electrode active material layer applied to a central portion of one surface of a negative electrode current collector, which has the form of a foil. The negative electrode is arranged with the negative electrode active material layer facing the positive electrode active material layer of the positive electrode. The separator is arranged between the positive electrode and the negative electrode.

In addition, the above-described power storage cell includes a sealing portion arranged between the positive electrode and the negative electrode on an outer side of the positive electrode active material layer and the negative electrode active material layer. The sealing portion maintains a gap between the positive electrode current collector and the negative electrode current collector to prevent a short circuit between the current collectors, and provides a liquid tight seal between the positive electrode current collector and the negative electrode current collector, thereby forming a sealed space for accommodating a liquid electrolyte between the positive electrode current collector and the negative electrode current collector.

### CITATION LIST

### Patent Literature

Patent Literature 1: JP2017-16825A

### SUMMARY OF INVENTION

### Technical Problem

One approach to increasing the energy density of a power storage cell is to increase the weight per unit area of active material layer. However, when the weight per unit area of the negative electrode active material layer is increased to at least a certain level, a problem arises in that the amount of gas generated from the electrode increases significantly.

### Solution to Problem

In one aspect of the present disclosure, a power storage device includes a positive electrode including a positive electrode active material layer, a negative electrode including a negative electrode active material layer, a separator disposed between the positive electrode and the negative electrode, and a liquid electrolyte disposed between the positive electrode and the negative electrode. The negative electrode active material layer has a weight per unit area of 200 g/m² or more. The negative electrode active material layer includes graphite particles, carbon fibers, and a negative electrode binder. The liquid electrolyte includes lithium difluorophosphate and vinylene carbonate.

In the power storage device described above, the carbon fibers preferably include fiber bundles each formed by bundling multiple single-walled carbon nanotubes, and each fiber bundle is preferably in contact with and extending across two or more of the graphite particles.

In the power storage device described above, an average particle diameter (D50) of the graphite particles is preferably in a range of 3 µm to 30 µm, and fiber lengths of the single-walled carbon nanotubes are preferably in a range of 5 µm to 50 µm.

In the power storage device described above, the liquid electrolyte preferably includes a cyclic sulfonic acid ester.

In the power storage device described above, the positive electrode active material layer preferably includes a positive electrode active material and a positive electrode binder, and the positive electrode binder is preferably an aqueous binder.

The power storage device described preferably includes a sealing portion that forms a sealed space accommodating the liquid electrolyte between the positive electrode and the negative electrode.

In the power storage device described above, a content of the graphite particles in the negative electrode active material layer is preferably 97 mass% or more. A average particle diameter (D50) of the graphite particles is preferably in a range of 10 µm to 20 µm. A specific surface area of the negative electrode active material layer is preferably in a range of 0. 5 m²/g to 1.5 m²/g. A content of the lithium difluorophosphate in the liquid electrolyte per surface area of the negative electrode active material layer is preferably 3 mg/m² or more. A content of the vinylene carbonate in the liquid electrolyte per surface area of the negative electrode active material layer is preferably 3 mg/m² or more.

In the power storage device described above, the liquid electrolyte preferably includes a cyclic sulfonic acid ester. A content of the graphite particles in the negative electrode active material layer is preferably 97 mass% or more. An average particle diameter (D50) of the graphite particles is preferably in a range of 10 µm to 20 µm. A specific surface area of the negative electrode active material layer is preferably in a range of 0.5 m²/g to 1.5 m²/g. A content of the cyclic sulfonic acid ester in the liquid electrolyte per surface area of the negative electrode active material layer is preferably 0.6 mg/m² or more.

In one aspect of the present disclosure, a method for manufacturing the power storage device described above is provided. The method includes: an assembly step of assembling a battery assembly including the positive electrode, the negative electrode, the separator, and the liquid electrolyte; and an initial charging step for the battery assembly. The initial charging step includes: a first charging step to a first voltage in a range of 2.0 V to 3.0 V; and a second charging step of charging from the first voltage to a specified target voltage. A charging rate of the second charging step is higher than a charging rate of the first charging step.

In the method for manufacturing the power storage device described above, the assembly step preferably includes an electrode formation step of forming the negative electrode active material layer by applying and drying a negative electrode mixture on a surface of a negative electrode current collector. The negative electrode mixture preferably includes graphite particles, carbon fibers, a negative electrode binder, and a dispersion medium, the negative electrode mixture having a solid content of 65 mass% or less.

### Advantageous Effects of Invention

According to the present invention, gas generated from an electrode can be reduced.

### BRIEF DESCRIPTION OF DRAWINGS

[Fig. 1] Fig. 1 is a cross-sectional view of a power storage device.
[Fig. 2] Fig. 2 is a schematic diagram showing a state of graphite particles and carbon fibers in a negative electrode active material layer.
[Fig. 3] Fig. 3 is an explanatory diagram of an activation step.
[Fig. 4] Parts (a) to (d) of Fig. 4 are schematic diagrams showing a process of forming an SEI film on a graphite particle.
[Fig. 5] Fig. 5 is a graph showing results of a storage test for measuring an amount of gas generated.

### DESCRIPTION OF EMBODIMENTS

An embodiment of the present invention will now be described with reference to the drawings.

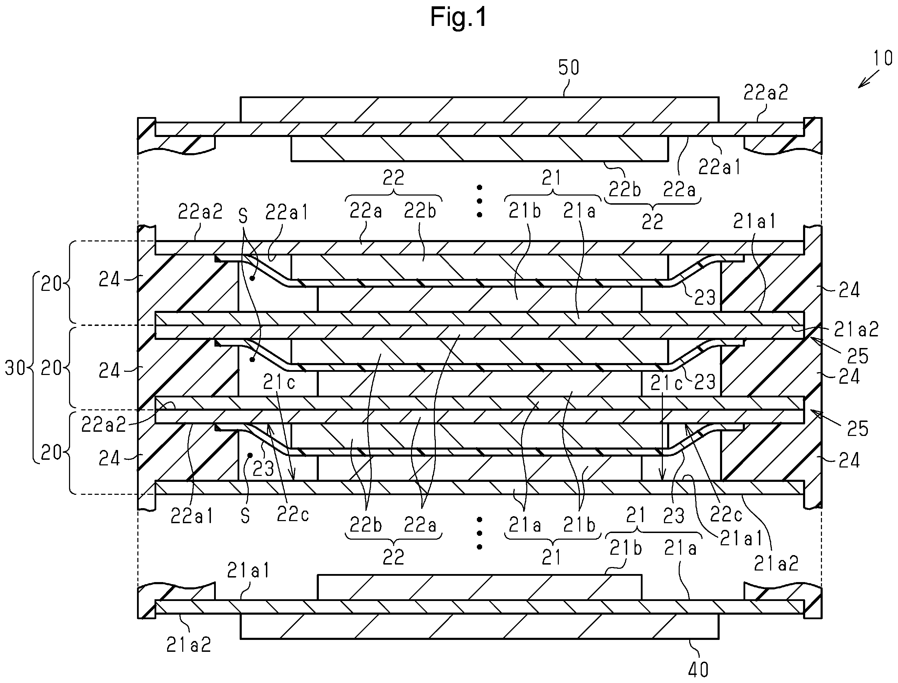

A power storage device 10 shown in Fig. 1 is, for example, a power storage module used as a battery for various types of vehicles such as a forklift, a hybrid electric vehicle, and a battery electric vehicle. The power storage device 10 is, for example, a lithium-ion rechargeable battery. The power storage device 10 may alternatively be an electric double-layer capacitor. In the present embodiment, a case in which the power storage device 10 is a lithium-ion rechargeable battery is illustrated.

### <Schematic Structure of the Power Storage Device>

As illustrated in Fig. 1, the power storage device 10 includes a cell stack 30 (stacked body) in which multiple power storage cells 20 are stacked (laminated) in a stacking direction. Hereinafter, the stacking direction of the power storage cells 20 will be simply referred to as the stacking direction. Each power storage cell 20 includes a positive electrode 21, a negative electrode 22, a separator 23, and a sealing portion 24.

The positive electrode 21 includes a positive electrode current collector 21a and a positive electrode active material layer 21b provided on a first surface 21a1 of the positive electrode current collector 21a.

In plan view as viewed from the stacking direction (hereinafter, simply referred to as plan view), the positive electrode active material layer 21b is formed in a central portion of the first surface 21a1 of the positive electrode current collector 21a. A peripheral edge portion of the first surface 21a1 of the positive electrode current collector 21a in plan view is an uncoated positive electrode portion 21c, on which the positive electrode active material layer 21b is not provided. The uncoated positive electrode portion 21c is disposed to surround the periphery of the positive electrode active material layer 21b in plan view.

The negative electrode 22 includes a negative electrode current collector 22a and a negative electrode active material layer 22b provided on a first surface 22a1 of the negative electrode current collector 22a. In plan view, the negative electrode active material layer 22b is formed in a central portion of the first surface 22a1 of the negative electrode current collector 22a. A peripheral edge portion of the first surface 22a1 of the negative electrode current collector 22a in plan view is an uncoated negative electrode portion 22c, on which the negative electrode active material layer 22b is not provided. The uncoated negative electrode portion 22c is disposed to surround the periphery of the negative electrode active material layer 22b in plan view.

The positive electrode 21 and the negative electrode 22 are disposed such that the positive electrode active material layer 21b and the negative electrode active material layer 22b face each other in the stacking direction. In other words, the direction in which the positive electrode 21 and the negative electrode 22 face each other coincides with the stacking direction. The negative electrode active material layer 22b is formed to be slightly larger than the positive electrode active material layer 21b, and, in plan view as viewed from the stacking direction, the entire formation region of the positive electrode active material layer 21b is located within the formation region of the negative electrode active material layer 22b.

The positive electrode current collector 21a includes a second surface 21a2 located on an opposite side from the first surface 21a1, and the negative electrode current collector 22a includes a second surface 22a2 located on an opposite side from the first surface 22a1. The cell stack 30 has a structure in which multiple power storage cells 20 are stacked such that the second surface 21a2 of each positive electrode current collector 21a and the second surface 22a2 of the corresponding negative electrode current collector 22a are in contact with each other. As a result, the power storage cells 20 forming the cell stack 30 are connected in series.

In the cell stack 30, a pseudo bipolar electrode 25 is formed by treating the positive electrode current collector 21a and the negative electrode current collector 22a of two power storage cells 20 adjacent in the stacking direction and in contact with each other as a single current collector. The pseudo bipolar electrode 25 includes a current collector having a structure in which the positive electrode current collector 21a and the negative electrode current collector 22a are stacked, a positive electrode active material layer 21b formed on a surface on one side of the current collector, and a negative electrode active material layer 22b formed on a surface on the other side of the current collector.

The positive electrode current collector 21a and the negative electrode current collector 22a may alternatively form a bipolar current collector in which the second surface 21a2 of the positive electrode current collector 21a and the second surface 22a2 of the negative electrode current collector 22a are joined to each other. In this case, the positive electrode 21 and the negative electrode 22 form a bipolar electrode 25 including a single bipolar current collector formed by joining the positive electrode current collector 21a and the negative electrode current collector 22a to each other. In other words, the bipolar electrode 25 is configured such that a surface of the positive electrode current collector 21a of the positive electrode 21 forming one of two adjacent power storage cells 20, the surface being located opposite to the first surface 21a1, is joined to a surface of the negative electrode current collector 22a of the negative electrode 22 forming the other of the two adjacent power storage cells 20, the surface being located opposite to the first surface 22a1.

The separator 23 is a member disposed between the positive electrode 21 and the negative electrode 22, and separates the positive electrode 21 from the negative electrode 22 to prevent a short circuit caused by contact between the electrodes while allowing passage of charge carriers such as lithium ions.

The separator 23 is, for example, a porous sheet or a nonwoven fabric including a polymer that absorbs and retains a liquid electrolyte. Examples of the material forming the separator 23 include polypropylene, polyethylene, polyolefin, and polyester. The separator 23 may have a single-layer structure or a multilayer structure. The multilayer structure may include, for example, an adhesive layer, or a ceramic layer as a heat-resistant layer.

The sealing portion 24 is disposed between the first surface 22a1 of the positive electrode current collector 21a of the positive electrode 21 and the first surface 22a1 of the negative electrode current collector 22a of the negative electrode 22, and on an outer side of the positive electrode active material layer 21b and the negative electrode active material layer 22b, and is bonded to both the positive electrode current collector 21a and the negative electrode current collector 22a. The sealing portion 24 prevents a short circuit between the current collectors by electrically insulating the positive electrode current collector 21a and the negative electrode current collector 22a from each other.

The sealing portion 24 is made of, for example, a polyolefin resin. Examples of the polyolefin resin include polyethylene, polypropylene, modified polyethylene, modified polypropylene, isoprene, modified isoprene, polybutene, modified polybutene, and polybutadiene. Examples of the modified polyethylene include acid-modified polyethylene and epoxy-modified polyethylene. Examples of the modified polypropylene include acid-modified polypropylene and epoxy-modified polypropylene. These known polyolefin resins may be used in combination of two or more thereof. The polyolefin resin may be a thermoplastic resin or a thermosetting resin.

In plan view, the sealing portion 24 extends along peripheral edge portions of the positive electrode current collector 21a and the negative electrode current collector 22a and is formed in a frame shape that surrounds the positive electrode active material layer 21b and the negative electrode active material layer 22b. The sealing portion 24 is disposed between the uncoated positive electrode portion 21c of the first surface 21a1 of the positive electrode current collector 21a and the uncoated negative electrode portion 22c of the first surface 22a1 of the negative electrode current collector 22a.

A sealed space S surrounded by the frame-shaped sealing portion 24, the positive electrode 21, and the negative electrode 22 is formed in each power storage cell 20. The separator 23 and liquid electrolyte are accommodated in the sealed space S. The peripheral edge portion of the separator 23 is embedded in the sealing portion 24.

By sealing the sealed space S between the positive electrode 21 and the negative electrode 22, the sealing portion 24 suppresses permeation of the liquid electrolyte accommodated in the sealed space S to the outside. The sealing portion 24 also prevents moisture outside the power storage device 10 from entering the sealed space S. Further, the sealing portion 24 is able to suppress leakage of gas generated from the positive electrode 21 or the negative electrode 22 due to a charge-discharge reaction or the like, to the outside of the power storage device 10.

The sealing portion 24 of each power storage cell 20 includes an outer peripheral portion extending outward from the edges of the positive electrode current collector 21a and the negative electrode current collector 22a. The outer peripheral portion protrudes, as viewed from the stacking direction, in a direction orthogonal to the stacking direction beyond the peripheral edges of the positive electrode current collector 21a and the negative electrode current collector 22a. Power storage cells 20 adjacent to each other in the stacking direction are integrated by bonding the outer peripheral portions of their respective sealing portions 24 to each other. Examples of methods for bonding adjacent sealing portions 24 include known welding methods such as thermal welding, ultrasonic welding, and infrared welding.

The power storage device 10 includes two conductive bodies composed of a positive electrode energization plate 40 and a negative electrode energization plate 50 arranged so as to sandwich the cell stack 30 in the stacking direction of the cell stack 30. The positive electrode energization plate 40 and the negative electrode energization plate 50 are each formed of a highly conductive material.

The positive electrode energization plate 40 is electrically connected to the second surface 21a2 of the positive electrode current collector 21a of the positive electrode 21 disposed at the outermost position at one end in the stacking direction. The negative electrode energization plate 50 is electrically connected to the second surface 22a2 of the negative electrode current collector 22a of the negative electrode 22 disposed at the outermost position at the other end in the stacking direction.

Charging and discharging of the power storage device 10 are performed through terminals provided on the positive electrode energization plate 40 and the negative electrode energization plate 50, respectively. As a material forming the positive electrode energization plate 40, for example, the same material as that forming the positive electrode current collector 21a can be used. The positive electrode energization plate 40 may be formed of a metal plate thicker than the positive electrode current collector 21a used in the cell stack 30. As a material forming the negative electrode energization plate 50, the same material as that forming the negative electrode current collector 22a can be used, for example. The negative electrode energization plate 50 may be formed of a metal plate thicker than the negative electrode current collector 22a used in the cell stack 30.

### <Details of the Negative Electrode>

Next, details of the negative electrode 22 will be described.

The negative electrode current collector 22a is a chemically inert electrical conductor that continuously conducts current to the negative electrode active material layer 22b during discharge or charge of a lithium-ion rechargeable battery. One example of the negative electrode current collector 22a is a copper current collector in which the surface serving as the first surface 22a1 is made of copper. The copper current collector may be a unitary body entirely formed of copper, or may be a composite having a portion formed of copper and a portion formed of a material other than copper. Examples of such a unitary body include copper foil such as electrolytic copper foil. Examples of such a composite include a multilayer structure in which a layer forming the first surface 22a1 is a copper layer, and a substrate that has a surface including the first surface 22a1 is coated with a copper film.

Examples of materials other than copper include metal materials, electrically conductive resin materials, and electrically conductive inorganic materials. Examples of the metal materials include aluminum, nickel, titanium, and stainless steel (for example, SUS304, SUS316, SUS301, and SUS304 as specified in JIS G 4305:2015). Examples of the electrically conductive resin materials include electrically conductive polymer materials, or resins obtained by adding a conductive filler as needed to a non-conductive polymer material. The negative electrode current collector 22a may take the form of, for example, a foil, sheet, or film. The thickness of the negative electrode current collector 22a is, for example, from 1 to 100 µm.

The negative electrode active material layer 22b includes graphite particles, carbon fibers, and a negative electrode binder.

### Graphite Particles

The graphite particles are included in the negative electrode active material layer 22b as a negative electrode active material capable of storing and releasing charge carriers such as lithium ions. Examples of graphite for the graphite particles include natural graphite, artificial graphite, hard carbon (non-graphitizable carbon), and soft carbon (graphitizable carbon). Examples of the artificial graphite include highly oriented graphite and mesocarbon microbeads.

An average particle diameter (D50) of the graphite particles is, for example, 3 µm or more, preferably 5 µm or more, and more preferably 10 µm or more. The average particle diameter (D50) of the graphite particles is, for example, 30 µm or less, preferably 25 µm or less, and more preferably 20 µm or less. The average particle diameter (D50) of the graphite particles can be measured, for example, using a laser diffraction particle size analyzer.

The content of the graphite particles in the negative electrode active material layer 22b is, for example, 93 mass% or more, preferably 95 mass% or more, and more preferably 97 mass% or more. The content of the graphite particles in the negative electrode active material layer 22b is, for example, 99 mass% or less, preferably 98 mass% or less, and more preferably 97.5 mass% or less.

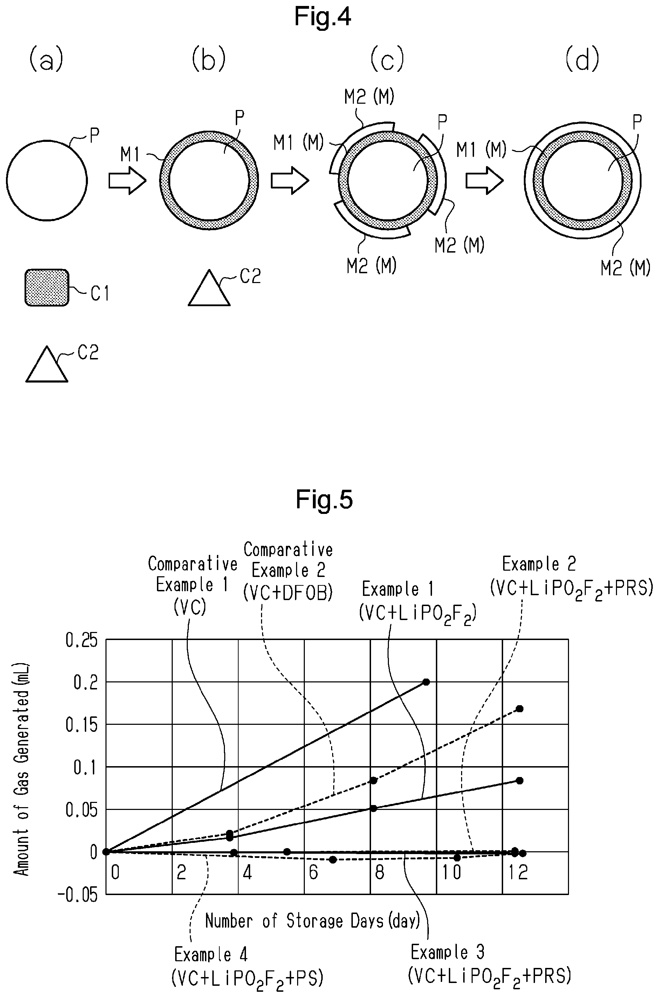

As shown in parts (c) and (d) of Fig. 4, the graphite particle P may have a solid electrolyte interphase (SEI) film formed by decomposition of the liquid electrolyte. The graphite particle P in the example shown in parts (c) and (d) of Fig. 4 has an SEI film M. The SEI film M includes a first layer M1 and a second layer M2. The first layer M1 of the SEI film M is formed on the surface of the graphite particle P and covers part or all of the surface of the graphite particle P. The first layer M1 is composed of a decomposition product of lithium difluorophosphate contained in the liquid electrolytes. The second layer M2 is formed on the surface of the first layer M1 and covers part or all of the surface of the first layer M1. The second layer M2 is composed of a decomposition product of vinylene carbonate contained in the liquid electrolyte. The SEI film M is a protective film that suppresses contact between the graphite particle P and the liquid electrolyte. Details of the formation mechanism of the SEI film M will be described later.

### Carbon Fibers

The carbon fibers are included in the negative electrode active material layer 22b as a conductive additive for increasing electrical conductivity. The carbon fibers are, for example, carbon nanotubes. Carbon nanotubes can be broadly classified into two types: single-walled carbon nanotubes and multi-walled carbon nanotubes. A single-walled carbon nanotube is a tubular structure formed by seamlessly rolling a single graphene sheet. A multi-walled carbon nanotube is a composite body in which multiple single-walled carbon nanotubes of different diameters are nested within a single single-walled carbon nanotube. The carbon fibers included in the negative electrode active material layer 22b are preferably single-walled carbon nanotubes.

The fiber length and fiber diameter of the carbon fibers are not particularly limited. The fiber length of the carbon fibers is, for example, in a range of 5 µm to 1000 µm. The fiber diameter of the carbon fibers, for example, in a range of 1 nm to 20 nm. The fiber length and fiber diameters of the carbon fibers can be measured, for example, using an electron microscope such as a scanning electron microscope (SEM) or a transmission electron microscope (TEM).

The content of the carbon fibers in the negative electrode active material layer 22b is, for example, in a range of 0.005 mass% to 0.05 mass%.

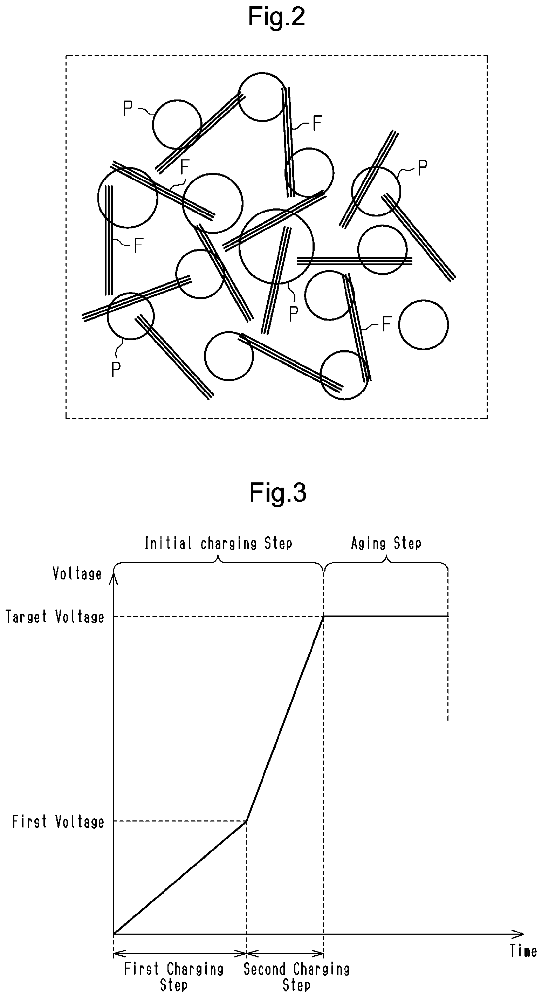

With reference to Fig. 2, one example of a preferred state of the graphite particles and the carbon fibers in the negative electrode active material layer 22b will be described. In Fig. 2, illustration of the negative electrode binder and other components to be described later is omitted.

As shown in Fig. 2, the negative electrode active material layer 22b includes graphite particles P and fiber bundles F. Each fiber bundle F is formed by bundling multiple single-walled carbon nanotubes. One fiber bundle F includes, for example, about a few to a few dozen single-walled carbon nanotubes. The negative electrode active material layer 22b may include individual single-walled carbon nanotubes that do not form fiber bundles F.

In the negative electrode active material layer 22b shown in Fig. 2, the single-walled carbon nanotubes, which are carbon fibers, are dispersed in units of the fiber bundles F and are arranged as a whole in a network pattern (for example, a spiderweb form). The fiber bundles F are in contact with and extend across multiple graphite particles P. In the present specification, a state in which the fiber bundles F are in contact with and extend across multiple graphite particles (hereinafter, also referred to as a specific dispersion state) means a state in which, among multiple fiber bundles F, 50% or more of the fiber bundles F, on a bundle-count basis, are in contact with and extend across multiple graphite particles.

With respect to one fiber bundle F, if at least one fiber forming the fiber bundle F is in contact with a graphite particle A, the fiber bundle F is regarded as being in contact with the graphite particle A. Further, with respect to one fiber bundle F, if at least one fiber forming the fiber bundle F is in contact with a graphite particle A and at least one fiber forming the fiber bundle F is in contact with a graphite particle B, the fiber bundle F is regarded as being in contact with and extending across the graphite particle A and the graphite particle B. In this case, the fiber in contact with the graphite particle A and the fiber in contact with the graphite particle B may be the same or different. The specific dispersion state can be observed, for example, using an electron microscope such as a scanning electron microscope (SEM) and a transmission electron microscope (TEM).

From the viewpoint of forming the specific dispersion state, the fiber length of the single-walled carbon nanotubes is preferably, for example, in a range of 5 µm to 50 µm. The fiber length is more preferably 10 µm or more, and still more preferably 15 µm or more. The fiber length is more preferably 40 µm or less, and still more preferably 30 µm or less. The ratio of the fiber length to the average particle diameter of the graphite particles P (fiber length of the single-walled carbon nanotubes/average particle diameter of the graphite particles) is preferably, for example, greater than 1. The ratio is, for example, 20 or less.

From the viewpoint of forming the specific dispersion state, the content of the single-walled carbon nanotubes in the negative electrode active material layer 22b is preferably, for example, in a range of 0.005 mass% to 0.05 mass%. The content is more preferably 0.007 mass% or more, and still more preferably 0.009 mass% or more. The content is more preferably 0.03 mass% or less, and still more preferably 0.02 mass% or less. The ratio of the content to the content of the graphite particles P (content of the single-walled carbon nanotubes/content of the graphite particles) is preferably, for example, in a range of 0.0001 to 0.0005.

### Negative Electrode Binder

Examples of the negative electrode binder include the following: fluorine-containing resins such as polyvinylidene fluoride, polytetrafluoroethylene, and fluorine rubber; thermoplastic resins such as polypropylene and polyethylene; imide-based resins such as polyimide and polyamide-imide; alkoxysilyl group-containing resin; acrylic resins such as poly(meth)acrylic; styrene-butadiene rubber; carboxymethyl cellulose; alginates such as sodium alginate and ammonium alginate; water-soluble cellulose ester crosslinked products; and starch-acrylic acid graft polymers. These negative electrode binders may be used alone or in combination of two or more. Examples of the solvent or dispersion medium used for dissolving or dispersing the negative electrode binder include water and N-methyl-2-pyrrolidone.

### Other Components

The negative electrode active material layer 22b may further include, as necessary, other components in addition to the graphite particles, the carbon fibers, and the negative electrode binder. Examples of the other components include a negative electrode active material other than the graphite particles, a conductive additive other than the carbon fibers, an electrolyte (such as a polymer matrix, an ion-conductive polymer, and a liquid electrolyte), and an electrolyte-supporting salt (lithium salt) for increasing ion conductivity.

Examples of the negative electrode active material other than the graphite particles include elements capable of being alloyed with lithium, such as silicon and tin. The negative electrode active material is not particularly limited and can be any element, alloy, or compound capable of storing and releasing charge carriers such as lithium ions.

Examples of the conductive additive other than the carbon fibers include acetylene black, carbon black, and graphite.

The types and blending ratios of the other components included in the negative electrode active material layer 22b are not particularly limited, and common general knowledge relating to lithium-ion rechargeable batteries may be applied as appropriate.

Weight Per Unit Area and Thickness of Negative Electrode Active Material Layer 22b

The weight per unit area of the negative electrode active material layer 22b is 200 g/m² or more, preferably 250 g/m², and more preferably 300 g/m². The weight per unit area of the negative electrode active material layer 22b is, for example, 500 g/m² or less, preferably 450 g/m², and more preferably 400 g/m² or less.

The thickness of the negative electrode active material layer 22b is, for example, 0.2 mm or more, preferably 0.25 mm or more, and more preferably, 0.3 mm or more. The thickness of the negative electrode active material layer 22b is, for example, 0.4 mm or less.

### Surface Area of Negative Electrode Active Material Layer 22b

The negative electrode active material layer 22b has a porous form that allows infiltration of the liquid electrolyte. The surface area of the negative electrode active material layer 22b is, for example, in a range of 250 mm² to 1350 mm².

The surface area of the negative electrode active material layer 22b can be calculated as the product of the specific surface area of the negative electrode active material layer 22b and the total mass of the negative electrode active material layer 22b. In the present specification, the specific surface area of the negative electrode active material layer 22b means the BET surface area per unit mass of the negative electrode active material layer 22b measured by N₂ adsorption according to the BET method. The total mass of the negative electrode active material layer 22b can be calculated as the product of the weight per unit area of the negative electrode active material layer 22b and the area of the region of the negative electrode current collector 22a in which the negative electrode active material layer 22b is formed.

The specific surface area of the negative electrode active material layer 22b is, for example, in a range of 0.5 m²/g to 1.5 m²/g. The total mass of one negative electrode active material layer 22b, that is, the total mass of the negative electrode active material layer 22b included in one power storage cell 20, is, for example, in a range of 20 g to 1500 g, and preferably in a range of 500 g to 900 g. The area of the region of the negative electrode current collector 22a in which the negative electrode active material layer 22b is formed is, for example, in a range of 1000 cm² to 30000 cm², and preferably in a range of 10000 cm² to 30000 cm².

The method for forming the negative electrode active material layer 22b on the surface of the negative electrode current collector 22a is not particularly limited, and known methods such as roll coating may be employed. A coating film may be provided on the surface of the negative electrode current collector 22a. Examples of the coating film include a heat-resistant layer provided for improving the thermal stability of the negative electrode 22.

### <Details of the Positive Electrode>

Next, details of the positive electrode 21 will be described.

The positive electrode current collector 21a is a chemically inert electric conductor that continuously conducts current through the positive electrode active material layer 21b during charging and discharging of the lithium-ion rechargeable battery. One example of the positive electrode current collector 21a is an aluminum current collector having an aluminum surface, which serves as the first surface 21a1. The aluminum current collector may be a unitary body made entirely of aluminum, or a composite body including an aluminum portion and a portion made of a material other than aluminum. Examples of such a unitary body include aluminum foil such as rolled aluminum foil. Examples of the composite include a multilayer structure in which a layer forming the first surface 21a1 is an aluminum layer, and a substrate having a surface including the first surface 21a1 that is covered with an aluminum film.

Examples of materials other than aluminum include metal materials, electrically conductive resin materials, and electrically conductive inorganic materials. Examples of the metal materials include copper, nickel, titanium, and stainless steel (for example, SUS304, SUS316, SUS301, and SUS304 as specified in JIS G 4305:2015). Examples of the electrically conductive resin materials include electrically conductive polymer materials, or resins obtained by adding a conductive filler as needed to a non-conductive polymer material. The positive electrode current collector 21a may take the form of, for example, a foil, sheet, or film. The thickness of the positive electrode current collector 21a is, for example, from 1 to 100 µm.

The positive electrode active material layer 21b contains a positive electrode active material capable of storing and releasing charge carriers such as lithium ions. As the positive electrode active material, any material usable as a positive electrode active material for a lithium-ion rechargeable battery may be employed, such as lithium composite metal oxides having a layered rock-salt structure, metal oxides having a spinel structure, and polyanion-based compounds. Two or more positive electrode active materials may also be used in combination. In the present embodiment, the positive electrode active material layer 21b includes olivine-type lithium iron phosphate (LiFePO₄) as a polyanion-based compound.

One example of the positive electrode active material layer 21b includes a positive electrode binder. Examples of the positive electrode binder include those exemplified above as the negative electrode binder. These positive electrode binders may be used alone or in combination of two or more. Examples of the solvent or dispersion medium used for dissolving or dispersing the positive electrode binder include water and N-methyl-2-pyrrolidone.

One example of the positive electrode binder is an aqueous binder. The aqueous binder is a binder that is dissolvable or dispersible in an aqueous solvent, and is used by being mixed with the positive electrode active material in a state dispersed or dissolved in the aqueous solvent. The aqueous binder is not particularly limited, and a known material may be used as the aqueous binder included in a positive electrode active material layer of a lithium-ion rechargeable battery. Examples of the aqueous binder include those exemplified above as the negative electrode binder.

The positive electrode active material layer 21b may further include, as necessary, a conductive additive for increasing electrical conductivity, an electrolyte (such as a polymer matrix, an ion-conductive polymer, and a liquid electrolyte), an electrolyte supporting salt (lithium salt) for increasing ion conductivity, and the like. The conductive additive is added for increasing the electrical conductivity of the positive electrode 21. Examples of the conductive additive include acetylene black, carbon black, graphite, and carbon nanotubes. The types and blending ratios of the components included in the positive electrode active material layer 21b are not particularly limited, and common general knowledge relating to lithium-ion rechargeable batteries may be applied as appropriate.

The weight per unit area and the thickness of the positive electrode active material layer 21b are not particularly limited, and common general knowledge relating to lithium-ion rechargeable batteries may be applied as appropriate. The weight per unit area of the positive electrode active material layer 21b is, for example, in a range of 500 g/m² to 800 g/m². The thickness of the positive electrode active material layer 21b is, for example, in a range of 0.3 mm to 0.4 mm.

The method for forming the positive electrode active material layer 21b on the surface of the positive electrode current collector 21a is not particularly limited, and known methods such as roll coating may be employed. A coating film may be provided on the surface of the positive electrode current collector 21a. Examples of the coating film include a heat-resistant layer provided for improving the thermal stability of the positive electrode 21.

### <Liquid Electrolyte>

The liquid electrolyte includes a non-aqueous solvent and an electrolyte salt dissolved in the non-aqueous solvent, and further includes a specific additive.

Examples of the electrolyte salt include known lithium salts such as LiClO₄, LiAsF₆, LiPF₆, LiBF₄, LiCF₃SO₃, LiN(FSO₂)₂, and LiN(CF₃SO₂)₂.

Examples of the non-aqueous solvent include known solvents such as cyclic carbonates, cyclic esters, chain carbonates, chain esters, and ethers. Two or more non-aqueous solvents may also be used in combination. One example of the non-aqueous solvent is an ester such as a cyclic ester or a chain ester. Esters are more likely to generate gas due to self-discharge than other solvents such as carbonates.

Examples of the non-aqueous electrolyte solution include a non-aqueous electrolyte solution obtained by adding the specific additive to a solution prepared by dissolving the lithium salt in the non-aqueous solvent at a concentration of, for example, about 0.5 mol/L to 2.5 mol/L.

The liquid electrolyte includes lithium difluorophosphate (LiPO₂F₂), which is one of the specific additives. The content of lithium difluorophosphate in the liquid electrolyte is set according to the surface area of the negative electrode active material layer 22b disposed in the same sealed space S as the liquid electrolyte. Specifically, the content of lithium difluorophosphate in the liquid electrolyte per surface area of the negative electrode active material layer 22b is, for example, 3 mg/m² or more, preferably 4 mg/m² or more, and more preferably 5 mg/m² or more. The content of lithium difluorophosphate per surface area of the negative electrode active material layer 22b is, for example, 20 mg/m² or less, preferably 15 mg/m² or less, and more preferably 9 mg/m² or less.

In each of the sealed spaces S, the content of lithium difluorophosphate in the liquid electrolyte is adjusted so as to fall within the above range. In a case in which multiple negative electrode active material layers 22b are disposed in one sealed space S, the content of lithium difluorophosphate is adjusted so as to fall within the above range based on the sum of the above surface areas of the negative electrode active material layers 22b. Hereinafter, the "surface area of the negative electrode active material layer 22b disposed in the same sealed space S as the sealed space S in which the liquid electrolyte is accommodated" may be referred to as the "particular surface area of the negative electrode active material layer 22b." The concentration of lithium difluorophosphate in the liquid electrolyte is, for example, in a range of 0.3 mass% to 2.0 mass%, and preferably in a range of 1.0 mass% to 2.0 mass%.

The liquid electrolyte includes vinylene carbonate (1,3-dioxol-2-one), which is one of the specific additives. The content of vinylene carbonate in the liquid electrolyte is set according to the surface area of the negative electrode active material layer 22b disposed in the same sealed space S as the liquid electrolyte. Specifically, the content of vinylene carbonate in the liquid electrolyte per surface area of the negative electrode active material layer 22b is, for example, 3 mg/m² or more, preferably 4 mg/m² or more, and more preferably 5 mg/m² or more. The content of vinylene carbonate per surface area of the negative electrode active material layer 22b is, for example, 20 mg/m² or less, preferably 15 mg/m² or less, and more preferably 9 mg/m² or less.

In the liquid electrolyte, the ratio of the content of lithium difluorophosphate per surface area of the negative electrode active material layer 22b to the content of vinylene carbonate per surface area of the negative electrode active material layer 22b (lithium difluorophosphate/vinylene carbonate) is, for example, in a range of 0.5 to 2.0. The concentration of vinylene carbonate in the liquid electrolyte is, for example, in a range of 0.3 mass% to 2.0 mass%, and preferably 1.0 in a range of mass% to 2.0 mass%.

The liquid electrolyte preferably includes a cyclic sulfonic acid ester, which is one of the specific additives. The cyclic sulfonic acid ester is the above-described specific additive that is optionally added. Accordingly, the liquid electrolyte may have a configuration that does not include a cyclic sulfonic acid ester.

Examples of the cyclic sulfonic acid ester include propanesultone and propenesultone. The content of cyclic sulfonic acid ester in the liquid electrolyte is set according to the surface area of the negative electrode active material layer 22b disposed in the same sealed space S as the liquid electrolyte. Specifically, the content of the cyclic sulfonic acid ester in the liquid electrolyte per surface area of the negative electrode active material layer 22b is, for example, 0.6 mg/m² or more, preferably 0.8 mg/m² or more, and more preferably 1 mg/m² or more. The content of cyclic sulfonic acid ester per surface area of the negative electrode active material layer 22b is, for example, 20 mg/m² or less, preferably 15 mg/m² or less, and more preferably 9 mg/m² or less.

In the liquid electrolyte, the ratio of the content of the cyclic sulfonic acid ester per surface area of the negative electrode active material layer 22b to the content of vinylene carbonate per surface area of the negative electrode active material layer 22b (cyclic sulfonic acid ester/vinylene carbonate) is, for example, in a range of 0.1 to 2.0, and preferably in a range of 0.5 to 2.0. The concentration of the cyclic sulfonic acid ester in the liquid electrolyte is, for example, in a range of 0.1 mass% to 2.0 mass%, and preferably in a range of 1.0 mass% to 2.0 mass%.

### <Method of Manufacturing the Power Storage Device>

Next, a method for manufacturing the power storage device 10 according to the present embodiment will be described.

The method for manufacturing the power storage device 10 includes an assembly step of assembling a battery assembly and an activation step of activating the assembled battery assembly. In the present specification, the battery assembly refers to the power storage device 10 before the activation step.

### Assembly Step

The assembly step includes an electrode formation step, a power storage cell formation step, and a cell stack formation step.

In the electrode formation step, a positive electrode is formed by forming the positive electrode active material layer 21b on the surface of the positive electrode current collector 21a, and a negative electrode is formed by forming the negative electrode active material layer 22b on the surface of the negative electrode current collector 22a.

The positive electrode active material layer 21b is formed by applying, to one surface of the positive electrode current collector 21a, a positive electrode mixture that becomes the positive electrode active material layer 21b upon solidification to a specified thickness, and then performing a solidification treatment in accordance with the positive electrode mixture. One example of the positive electrode mixture includes a positive electrode active material, an aqueous positive electrode binder, and an aqueous solvent such as water. The solid content of the positive electrode mixture is, for example, in a range of 70 mass% to 80 mass%.

The negative electrode active material layer 22b is formed by applying, to one surface of the negative electrode current collector 22a, a negative electrode mixture that becomes the negative electrode active material layers 22b upon solidification to a specified thickness, and then performing a solidification treatment in accordance with the negative electrode mixture. The negative electrode mixture includes, for example, a negative electrode active material, graphite particles, carbon fibers, a negative electrode binder, and a dispersion medium such as water. The solid content of the negative electrode mixture is, for example, in a range of 50 mass% to 70 mass%. The solid content of the negative electrode mixture is preferably 65 mass% or less, and more preferably 60 mass% or less. By lowering the solid content of the negative electrode mixture, the dispersion state shown in Fig. 2, that is, the specific dispersion state in which the fiber bundles F are dispersed, can be more readily obtained in the formed negative electrode active material layer 22b.

In the power storage cell formation step, first, the positive electrode 21 and the negative electrode 22 are arranged with the separator 23 interposed therebetween such that the positive electrode active material layer 21b and the negative electrode active material layer 22b face each other in the stacking direction. In addition, a sealing material that becomes the sealing portion 24 is arranged between the positive electrode 21 and the negative electrode 22 and on an outer side of the positive electrode current collector 21a and the negative electrode current collector 22a. Examples of the sealing material include a resin sheet made of an acid-modified polyolefin resin and cut into the same shape as the shape of the sealing portion 24 in plan view.

Thereafter, the positive electrode 21, the negative electrode 22, the separator 23, and the sealing material are bonded by welding, thereby forming an individual assembly in which the positive electrode 21, the negative electrode 22, the separator 23, and the sealing portion 24 are integrated. Examples of methods for bonding the sealing material include known welding methods such as thermal welding, ultrasonic welding, and infrared welding.

Next, a liquid electrolyte is injected into the sealed space S inside the individual assembly through an injection port provided in a portion of the sealing portion 24, and then the injection port is sealed. Thus, an individual assembly forming one power storage cell 20 is formed.

In the cell stack formation step, first, multiple individual assemblies are stacked in the stacking direction such that the second surface 21a2 of the positive electrode current collector 21a and the second surface 22a2 of the negative electrode current collector 22a face each other. Thereafter, the individual assemblies are integrated by bonding the outer peripheral portions 24a of the sealing portions 24 of the individual assemblies adjacent to each other in the stacking direction to each other.

Next, the positive electrode energization plate 40 is placed on and fixed to the second surface 21a2 of the positive electrode current collector 21a of the positive electrode 21 that is disposed outermost at one end in the stacking direction, in a state of being electrically connected to the second surface 21a2. Similarly, the negative electrode energization plate 50 is placed on and fixed to the second surface 22a2 of the negative electrode current collector 22a of the negative electrode 22 that is disposed outermost at the other end in the stacking direction, in a state of being electrically connected to the second surface 22a2. Through the above steps, a battery assembly is formed.

### Activation Step

As shown in Fig. 3, the activation step includes an initial charging step and an aging step. By performing the activation step on the battery assembly, the power storage device 10 is obtained.

The initial charging step is a step of performing initial charging on the battery assembly using a charger such that the voltage of the battery assembly reaches a target voltage set within a range of a rated voltage to a threshold voltage. The rated voltage is set as an upper limit of a voltage at which the power storage device 10 can be used stably. The target voltage is a voltage set as a charged state of SOC 100%. The first target voltage (voltage per cell) is, for example, in a range of 3.5 V to 4.0 V. One example of the first target voltage is 3.75 V.

The initial charging step includes a first charging step to a first voltage and a second charging step from the first voltage to the target voltage. The first charging step and the second charging step have different charging rates. The charging rate of the first charging step is lower than the charging rate of the second charging step.

The charging rate of the first charging step is, for example, 0.01 C or less, and preferably 0.0075 C or less. The charging rate of the first charging step is, for example, 0.001 C or more, and preferably 0.0025 C or more.

The first voltage is a voltage at which both lithium difluorophosphate and vinylene carbonate decompose. The decomposition voltage of lithium difluorophosphate is, for example, 1.0 V or more. The decomposition voltage of vinylene carbonate is, for example, 2.0 V or more. Accordingly, the first voltage is, for example, 2.0 V or more, preferably 2.1 V or more, and more preferably 2.2 V or more. The first voltage is, for example, 3.0 V or less, preferably 2.8 V or less, and more preferably 2.7 V or less.

As described above, the decomposition voltage of lithium difluorophosphate is lower than the decomposition voltage of vinylene carbonate. Therefore, by performing charging in the first charging step at a relatively low charging rate, lithium difluorophosphate and vinylene carbonate decompose in the order of lithium difluorophosphate and then vinylene carbonate. Decomposition of vinylene carbonate may start after all of the lithium difluorophosphate has decomposed, or may start after decomposition of lithium difluorophosphate has started and before all of the lithium difluorophosphate has decomposed.

As shown in parts (a) and (b) of Fig. 4, in the first charging step, when lithium difluorophosphate C1 in the liquid electrolyte decomposes, the decomposition product adheres to the graphite particle P in the negative electrode active material layer 22b. As a result, the first layer M1 composed of the decomposition product of lithium difluorophosphate C1 is formed on the surface of the graphite particle P. By performing charging in the first charging step at a relatively low charging rate, the first layer M1 is formed reliably.

Next, as shown in parts (b) and (c) of Fig. 4, in the first charging step, when vinylene carbonate C2 in the liquid electrolyte decomposes, the decomposition product adheres to the graphite particle P in the negative electrode active material layer 22b. As a result, the second layer M2 composed of the decomposition product of vinylene carbonate C2 is formed on the surface of the first layer M1 formed on the surface of the graphite particle P. As a result, the SEI film M having the first layer M1 and the second layer M2 is formed on the graphite particle P. By performing charging in the first charging step at a relatively low charging rate, formation of the second layer M2 proceeds after the first layer M1 has been formed. As a result, the second layer M2 is formed reliably.

The charging rate of the second charging step is higher than the charging rate of the first charging step. The charging rate of the second charging step is, for example, more than 0.01 C, and preferably 0.1 C or more. The charging rate of the second charging step is, for example, 0.5 C or less.

By making the charging rate in the second charging step higher than the charging rate in the first charging step, the time required for the initial charging step is shortened. Further, by setting the first voltage to a relatively low value within a range higher than or equal to the voltage at which lithium difluorophosphate and vinylene carbonate decompose, the time required for the initial charging step is shortened. In this case, the period during which charging is performed at the low charging rate in the first charging step is relatively short, and the period during which charging is performed at the high charging rate in the second charging step is relatively long. As a result, the time required for the initial charging step is shortened.

The aging step is a step of maintaining the battery assembly, which is in a high-voltage state after the initial charging step, in a high-temperature environment for a specified period of time. The temperature in the aging step is, for example, in a range of 55°C to 70°C. The time for the aging step is, for example, in a range of 20 hours to 50 hours.

In the aging step, the state of the SEI film M formed on the surface of the graphite particle P changes from the state shown in part (c) of Fig. 4 to the state shown in part (d) of Fig. 4. Specifically, the SEI film M shown in part (c) includes portions in which the second layer M2 made of a decomposition product of vinylene carbonate is not partially formed; that is, portions in which the first layer M1 or the graphite particle P is exposed. The SEI film M shown in part (d) has no portion in which the first layer M1 or the graphite particle P is exposed, or has few such portions.

Immediately after the initial charging step, a large proportion of the SEI films are in the state shown in part (c) of Fig. 4, and a small proportion thereof are in the state shown in part (d) of Fig. 4. By performing the aging step, the state of the SEI film M changes from the state shown in part (c) to the state shown in part (d). As a result, the number of SEI films M in the state shown part (c) decreases, and the number of SEI films M in the state shown in part (d) increases. Since the SEI film M in the state shown in part (d) covers the entirety or a wide area of the surface of the graphite particle P, it is superior as a protective film that suppresses contact between the graphite particle P and the liquid electrolyte.

Operation of the present embodiment will now be described.

The power storage device 10 is adjusted such that the weight per unit area of the negative electrode active material layer 22b is 200 g/m² or more. In a power storage device having a typical configuration, when the weight per unit area of the negative electrode active material layer is increased to 200 g/m² or more, a problem arises in that the amount of gas generated from the electrodes increases significantly. Specifically, when the weight per unit area of the negative electrode active material layer is relatively large, the amount of electrons released from the negative electrode due to self-discharge increases. The electrons released from the negative electrode react with the liquid electrolyte at the negative electrode, thereby generating gas. The electrons released from the negative electrode also reach the positive electrode through the liquid electrolyte and react with water contained in the positive electrode active material layer of the positive electrode, thereby generating gas at the positive electrode. Therefore, when the weight per unit area of the negative electrode active material layer is increased, the amount of electrons released from the negative electrode due to self-discharge increases. As a result, the amount of gas generated from the electrodes increases significantly.

In the power storage device 10 according to the present embodiment, graphite particles are used as the negative electrode active material forming the negative electrode active material layer 22b, and the liquid electrolyte contains lithium difluorophosphate and vinylene carbonate. As a result, as shown in parts (c) and (d) of Fig. 4, the SEI film M made of decomposition products of lithium difluorophosphate and vinylene carbonate is formed on the surface of the graphite particle P. The SEI film M derived from lithium difluorophosphate and vinylene carbonate is a protective film that suppresses contact between the graphite particle P and the liquid electrolyte. By suppressing contact between the graphite particle P and the liquid electrolyte, self-discharge at the surface of the graphite particle P is suppressed. As a result, gas generation from the electrodes due to electrons released by self-discharge in the negative electrode active material layer 22b is reduced.

The SEI film M made of decomposition products of lithium difluorophosphate and vinylene carbonate has a first layer M1 made of a decomposition product of lithium difluorophosphate and a second layer M2 made of a decomposition product of vinylene carbonate. The second layer M2 is a barrier that suppresses contact with the liquid electrolyte, and the first layer M1 is an adhesive layer that firmly holds the second layer M2 around the graphite particle P.

The present embodiment has the following advantages.
(1) The power storage device 10 includes the positive electrode 21, which has the positive electrode active material layer 21b, the negative electrode 22, which has the negative electrode active material layer 22b, the separator 23, which is disposed between the positive electrode 21 and the negative electrode 22, and the liquid electrolyte disposed between the positive electrode 21 and the negative electrode 22, and the weight per unit area of the negative electrode active material layer 22b is 200 g/m² or more. The negative electrode active material layer 22b includes graphite particles, carbon fibers, and a negative electrode binder. The liquid electrolyte includes lithium difluorophosphate and vinylene carbonate.

According to the above-described configuration, the SEI film M is formed on the graphite particle P to be a protective film that suppresses contact between the graphite particle P and the liquid electrolyte. By suppressing contact between the graphite particle P and the liquid electrolyte, self-discharge at the surface of the graphite particle P is suppressed. This reduces generation of gas from the electrodes due to electrons released from the graphite particle P.

(2) The carbon fibers include fiber bundles formed by bundling multiple single-walled carbon nanotubes, and the fiber bundles are in contact with and extend across the graphite particles.

According to the above-described configuration, a decrease in electron conductivity of the negative electrode active material layer 22b resulting from an increase in the weight per unit area of the negative electrode active material layer 22b is suppressed by a small amount of carbon fibers (conductive additive). Particularly, as compared with a case in which a particulate conductive additive such as carbon black is used, the amount of conductive additive is reduced. Further, when carbon black is used as the conductive additive, the carbon black and the liquid electrolyte may react during charging, and the liquid electrolyte may decompose to generate gas. By using carbon fibers, generation of gas due to charge-discharge in carbon black is also suppressed.

(3) The liquid electrolyte includes a cyclic sulfonic acid ester.

According to the above-described configuration, the SEI film M formed is more effective as a protective film that suppresses contact between the graphite particle P and the liquid electrolyte. Therefore, the effect of suppressing self-discharge at the surface of the graphite particle P is improved. This further reduces generation of gas from the electrodes due to electrons released from the graphite particles P.

(4) The positive electrode active material layer 21b includes a positive electrode active material and a positive electrode binder. The positive electrode binder is an aqueous binder.

Since the positive electrode active material layer 21b including the aqueous binder is formed using a positive electrode mixture containing water, water such as crystal water tends to be contained therein. Therefore, the positive electrode active material layer 21b including the aqueous binder has a configuration in which gas is likely to be generated. For a power storage device having a configuration in which gas is likely to be generated, by applying the configuration of the above (1), the effect of reducing gas generation can be obtained more markedly.

(5) The non-aqueous solvent contained in the liquid electrolyte is an ester.

Esters are more likely to generate gas due to self-discharge than other solvents such as carbonates. For a power storage device having a configuration in which gas is likely to be generated, by applying the configuration of the above (1), the effect of reducing gas generation can be obtained more markedly.

(6) The sealing portion 24 between the positive electrode 21 and the negative electrodes 22 forms the sealed space S accommodating the liquid electrolyte.

In the above-described configuration, when gas is generated from the electrodes, the internal pressure of the sealed space S increases, and the sealed space S may deform so as to bulge. By reducing gas generation, deformation of the power storage device 10 due to gas generation is suppressed. Further, peeling of the sealing portion 24 due to an increase in the internal pressure of the sealed space S is suppressed.

(7) The method for manufacturing the power storage device 10 includes the assembly step of assembling the battery assembly and the initial charging step of performing initial charging on the battery assembly. The initial charging step includes a first charging step to a first voltage and a second charging step from the first voltage to the target voltage. The charging rate of the first charging step is lower than the charging rate of the second charging step. The first voltage is the voltage at which both lithium difluorophosphate and vinylene carbonate included in the liquid electrolyte decompose.

According to the above-described configuration, charging is performed at a relatively low charging rate in the first charging step. As a result, an SEI film having the first layer M1 made of a decomposition product of lithium difluorophosphate and the second layer M2 made of a decomposition product of vinylene carbonate can be formed more reliably on the surface of the graphite particle P forming the negative electrode current collector 22a. Accordingly, the effect of reducing the amount of gas generated, based on the function of the SEI film M to suppress contact between the graphite particle P and the liquid electrolyte, is more pronounced. Further, in the second charging step, charging is performed at a relatively high charging rate. This shortens the time required for the initial charging step.

(8) The assembly step includes the electrode formation step of forming the negative electrode active material layer 22b by applying and drying a negative electrode mixture on the surface of the negative electrode current collector 22a. The negative electrode mixture includes graphite particles, carbon fibers, a negative electrode binder, and a dispersion medium, and the negative electrode mixture has a solid content of 65 mass% or less. According to the above-described configuration, the fiber bundles F of the single-walled carbon nanotubes readily come into contact with and extend across multiple graphite particles P.

The above-described embodiment may be modified as follows. The above-described embodiment and the following modifications can be combined as long as the combined modifications remain technically consistent with each other.
- The shapes of the positive electrode current collector 21a and the positive electrode active material layer 21b in plan view are not particularly limited. The shapes may be a polygonal shape such as a rectangular shape, a circular shape, or an elliptical shape. The same applies to the negative electrode current collector 22a and the negative electrode active material layer 22b.
- The shape of the sealing portion 24 in plan view is not particularly limited, and may be a polygonal shape such as a rectangular shape, a circular shape, or an elliptical shape.
- A conductive layer that is in close contact with the positive electrode current collector 21a may be disposed between the positive electrode energization plate 40 and the positive electrode current collector 21a in order to improve conductive contact between these members. Examples of a conductive layer include a layer including carbon, such as acetylene black or graphite, and a layer having a lower hardness than the positive electrode current collector 21a, such as a plated layer of Au or the like. Further, a similar conductive layer may be arranged between the negative electrode energization plate 50 and the negative electrode current collector 22a.
- The number of the power storage cells 20 forming the power storage device 10 is not particularly limited. There may be only one power storage cell 20 in the power storage device 10.
- The positive electrode active material layer 21b or the negative electrode active material layer 22b may be provided on the second surface 21a2 of the positive electrode current collector 21a. Further, the positive electrode active material layer 21b or the negative electrode active material layer 22b may be provided on the second surface 22a2 of the negative electrode current collector 22a.
- The power storage device 10 may include a constraining member to constrain the cell stack 30. The constraining member applies a constraining load in the stacking direction of the cell stack 30 to a region in which the power storage cells 20 face each other; in particular, to where the positive electrode active material layer 21b overlaps the negative electrode active material layer 22b in plan view.

As long as a constraining load can be applied to the cell stack 30, the specific structure of the constraining member is not particularly limited. The constraining member includes, for example, flat constraining plates arranged at the opposite ends of the cell stack 30 in the stacking direction to sandwich the cell stack 30, and fastening members such as sets of bolts and nuts that fasten together the constraining plates. With the constraining member of the structure described above, the fastening members urge the constraining plates toward each other to apply a constraining load in the stacking direction to the cell stack 30.
- In the activation step, a charge-discharge step may be performed as necessary. The charge-discharge step is performed, for example, before the aging step or after the aging step. The charge-discharge step is a step of performing multiple charge-discharge cycles, each cycle including discharging and charging as one cycle. For example, in the case of the charge-discharge step performed before the aging step, multiple charge-discharge cycles are performed, each cycle including discharging to SOC 0% and charging to SOC 15%. In the case of the charge-discharge step performed after the aging step, multiple charge-discharge cycles are performed, each cycle including discharging to SOC 0% and charging to SOC 100%.
- The charging rate in the second charging step may be the same as the charging rate in the first charging step. In this case, the charging rate in the second charging step is, for example, 0.01 C or less, and preferably 0.0075 C or less. The charging rate in the second charging step is, for example, 0.001 C or more, and preferably 0.0025 C or more.
- The charging rate in the first charging step may be constant or may vary. For example, the charging rate may vary such that the charging rate increases stepwise, or there may be a period during which the charging rate is maintained constant. Similarly, the charging rate in the first charging step may be constant or may vary.
- The charging rate in the first charging step may be more than 0.01 C. Even in this case, although the amount produced decreases, the graphite particles P having the SEI film M are formed.

### Examples

### Specific examples of the above-described embodiment will now be described. Example 1

A positive electrode mixture was applied to one surface of an aluminum foil having a thickness of 35 µm. By drying and pressing the applied positive electrode mixture, a positive electrode sheet was produced in which a positive electrode active material layer was formed on a surface of a positive electrode current collector. The weight per unit area of positive electrode active material layer was 750 g/m². As the positive electrode mixture, a slurry was used that had a solid content of 75 mass%, contained LiFePO₄, single-walled carbon nanotubes, sodium carboxymethyl cellulose, and styrene-butadiene rubber at a solid content mass ratio of 98.55:0.05:0.4:1.0. Water was used as a solvent.

A negative electrode mixture was applied to one surface of a 12 µm-thick copper foil. By drying and pressing the applied negative electrode mixture, a negative electrode sheet was produced in which a negative electrode active material layer was formed on a surface of a negative electrode current collector. The weight per unit area of the negative electrode active material layer was 378 g/m². As the negative electrode mixture, a slurry was used that had a solid content of 56 mass%, contained graphite, single-walled carbon nanotubes, sodium carboxymethyl cellulose, styrene-butadiene rubber, and a thickener at a solid-content mass ratio of 97.17:0.01:0.4:2.3:0.12. Water was used as a solvent.

An electrode body was formed by interposing a separator between a positive electrode obtained by cutting the positive electrode sheet to 25 mm × 30 mm and a negative electrode obtained by cutting the negative electrode sheet to 26 mm × 31 mm, and the electrode body was accommodated in a laminate outer package. By injecting a liquid electrolyte into the outer package and sealing the outer package, the power storage device of Example 1 was obtained.

As the liquid electrolyte, a liquid electrolyte was used in which LiN(FSO₂)₂ was dissolved at a concentration of 1.4 M in a mixed solvent obtained by mixing ethylene carbonate and methyl propionate at a volume ratio of 15:85, and the additives shown in Table 1 were added thereto. In Example 1, a liquid electrolyte to which lithium difluorophosphate and vinylene carbonate were added as additives was used. In Table 1, the numerical values in the respective additive columns indicate the content of the additive per surface area of the negative electrode active material layer 22b, and the numerical values in parentheses therebelow indicate the concentration of the additive in the liquid electrolyte.

### Examples 2 to 4

Power storage devices of Examples 2 to 4 were obtained in the same manner as in Example 1 except that the additives added to the liquid electrolyte were different. As shown in Table 1, in Examples 2 and 3, a liquid electrolyte to which lithium difluorophosphate, vinylene carbonate, and propenesultone were added was used. Example 2 and Example 3 differ in the amount of propenesultone added. In Example 4, a liquid electrolyte to which lithium difluorophosphate, vinylene carbonate, and propanesultone were added was used.

### Comparative Examples 1 and 2

Power storage devices of Comparative Examples 1 and 2 were obtained in the same manner as in Example 1 except that the additives added to the liquid electrolyte were different. As shown in Table 1, in Comparative Example 1, a liquid electrolyte to which vinylene carbonate was added was used. In Comparative Example 2, a liquid electrolyte to which vinylene carbonate and lithium difluoro(oxalato)borate were added was used. The content of each additive in the liquid electrolyte is as shown in Table 1.

**[Table 1]**

| Additive | Example1 | Example2 | Example3 | Example4 | Comparative Example1 | Comparative Example2 |
|---|---|---|---|---|---|---|
| LiPO₂F₂ | 7mg/m² (1wt%) | 7mg/m² (1wt%) | 7mg/m² (1wt%) | 7mg/m² (1wt%) | - | - |
| VC | 7mg/m² (1wt%) | 7mg/m² (1wt%) | 7mg/m² (1wt%) | 7mg/m² (1wt%) | 7mg/m² (1wt%) | 7mg/m² (1wt%) |
| PRS | - | 1.4mg/m² (0.2wt%) | 7mg/m² (1wt%) | - | - | - |
| PS | - | - | - | 7mg/m² (1wt%) | - | - |
| DF0B | - | - | - | - | - | 7mg/m² (1wt%) |

The additives shown in Table 1 are as follows.
LiPO₂F₂: Lithium Difluorophosphate
VC: Vinylene Carbonate
PS: 1,3-Propanesultone
PRS: 1-Propene-1,3-Sultone
DFOB: Lithium Difluoro(oxalato)borate

### Measurement of Amount of Gas Generated

For each of the power storage devices of the Examples and Comparative Examples, charging was performed to 2.7 V (first voltage) at a constant current of 0.005 C. Next, charging was performed to 3.75 V (target voltage) at a constant current of 0.05 C, and then the power storage device in a high-voltage state was maintained at 65°C for 35 hours. Thereafter, discharge was performed to 3.0 V.

The volume of the power storage device after discharge was measured, and the measured value was taken as an initial volume. Thereafter, the power storage device after discharge was stored at 60° C for several days, and, during the storage period, the volume of the power storage device was measured periodically, and the amount of increase in volume from the initial volume was calculated. The calculated amount of increase in volume was used as the amount of gas generated. The results are shown in the graph of Fig. 5. The volume of the power storage device was measured by the Archimedes method using an electronic densimeter (MDS-300, manufactured by Alfa Mirage Co., Ltd.).

As described above, Comparative Example 1 is an example using a liquid electrolyte to which only vinylene carbonate was added, and Comparative Example 2 is an example in which vinylene carbonate and DFOB, which is a comparative additive, were added. As shown in Fig. 5, in Comparative Example 1 and Comparative Example 2, the amount of gas generated increased as the number of storage days increased. These results indicate that gas continued to be generated in the devices of Comparative Example 1 and Comparative Example 2.

Although detailed data are omitted, as a reference test, the same test was performed using a power storage device obtained in the same manner as in Comparative Example 1 except that the weight per unit area of the negative electrode active material layer was reduced (to 100 g/m²), and almost no gas generation was observed. These results indicate that the gas generation in Comparative Example 1 and Comparative Example 2 is attributable to the weight per unit area of the negative electrode active material layer being greater than or equal to a certain level.

As shown in Fig. 5, compared with Comparative Example 1 and Comparative Example 2, in Example 1 using a liquid electrolyte to which lithium difluorophosphate and vinylene carbonate were added, the amount of gas generated accompanying an increase in the number of storage days was reduced to one-half or less. These results indicate that gas generation from the electrodes can be reduced by adding lithium difluorophosphate and vinylene carbonate simultaneously.

Examples 2 to 4 are examples using a liquid electrolyte to which propanesultone or propenesultone was added in addition to lithium difluorophosphate and vinylene carbonate. As shown in Fig. 5, in Examples 2 to 4, no gas generation was observed. These results indicate that, by further adding a cyclic sulfonic acid ester such as propanesultone or propenesultone, gas generation from the electrodes can be significantly reduced or eliminated.

Although detailed data are omitted, as an additional test, a power storage device was obtained in the same manner as in Example 1 except that the single-walled carbon nanotubes (1 mass%) were replaced with particulate carbon black in an amount (3.8 mass%) that provided an equivalent capacity retention. When the amount of gas generated was measured for the power storage device, the amount of gas generated was greater than that in Example 1. These results indicate that the effect of reducing the amount of gas generated in each Example is an effect obtained when carbon fibers are used as the conductive additive.

### REFERENCE SIGNS LIST

F) Fiber Bundle
P) Graphite Particle
S) Sealed Space
10) Power Storage Device
21) Positive Electrode
21b) Positive Electrode Active Material Layer
22) Negative Electrode
22b) Negative Electrode Active Material Layer
23) Separator
24) Sealing Portion

## Claims

1. A power storage device, comprising:
a positive electrode including a positive electrode active material layer;
a negative electrode including a negative electrode active material layer;
a separator disposed between the positive electrode and the negative electrode; and
a liquid electrolyte disposed between the positive electrode and the negative electrode, wherein
the negative electrode active material layer has a weight per unit area of 200 g/m² or more, and
the power storage device is **characterized in that**
the negative electrode active material layer includes graphite particles, carbon fibers, and a negative electrode binder, and
the liquid electrolyte includes lithium difluorophosphate and vinylene carbonate.

2. The power storage device according to claim 1, wherein the carbon fibers include fiber bundles each formed by bundling multiple single-walled carbon nanotubes, each fiber bundle being in contact with and extending across two or more of the graphite particles.

3. The power storage device according to claim 1 or 2, wherein
an average particle diameter (D50) of the graphite particles is in a range of 3 µm to 30 µm, and
fiber lengths of the single-walled carbon nanotubes are in a range of 5 µm to 50 µm.

4. The power storage device according to any one of claims 1 to 3, wherein the liquid electrolyte includes a cyclic sulfonic acid ester.

5. The power storage device according to any one of claims 1 to 4, wherein
the positive electrode active material layer includes a positive electrode active material and a positive electrode binder, and
the positive electrode binder is an aqueous binder.

6. The power storage device according to any one of claims 1 to 5, further comprising a sealing portion that forms a sealed space accommodating the liquid electrolyte between the positive electrode and the negative electrode.

7. The power storage device according to any one of claims 1 to 6, wherein
a content of the graphite particles in the negative electrode active material layer is 97 mass% or more,
an average particle diameter (D50) of the graphite particles is in a range of 10 µm to 20 µm,
a specific surface area of the negative electrode active material layer is in a range of 0. 5 m²/g to 1.5 m²/g,
a content of the lithium difluorophosphate in the liquid electrolyte per surface area of the negative electrode active material layer is 3 mg/m² or more, and
a content of the vinylene carbonate in the liquid electrolyte per surface area of the negative electrode active material layer is 3 mg/m² or more.

8. The power storage device according to any one of claims 1 to 7, wherein
the liquid electrolyte includes a cyclic sulfonic acid ester,
a content of the graphite particles in the negative electrode active material layer is 97 mass% or more,
an average particle diameter (D50) of the graphite particles is in a range of 10 µm to 20 µm,
a specific surface area of the negative electrode active material layer is in a range of 0.5 m²/g to 1.5 m²/g, and
a content of the cyclic sulfonic acid ester in the liquid electrolyte per surface area of the negative electrode active material layer is 0.6 mg/m² or more.

9. A method for manufacturing the power storage device according to any one of claims 1 to 8, the method being **characterized by**:
an assembly step of assembling a battery assembly including the positive electrode, the negative electrode, the separator, and the liquid electrolyte; and
an initial charging step for the battery assembly, wherein
the initial charging step includes:
a first charging step to a first voltage in a range of 2.0 V to 3.0 V; and
a second charging step of charging from the first voltage to a specified target voltage, and
a charging rate of the second charging step is higher than a charging rate of the first charging step.

10. The method for manufacturing the power storage device according to claim 9, wherein
the assembly step includes an electrode formation step of forming the negative electrode active material layer by applying and drying a negative electrode mixture on a surface of a negative electrode current collector, and
the negative electrode mixture includes graphite particles, carbon fibers, a negative electrode binder, and a dispersion medium, the negative electrode mixture having a solid content of 65 mass% or less.
